## Europäisches Patentamt

## European Patent Office

## Office européen des brevets

(11) Publication number: **0 225 389**
**B1**

# EUROPEAN PATENT SPECIFICATION

(45) Date of publication of patent specification: **16.08.90**

(51) Int. Cl.⁵: **F 16 H 1/38, F 16 H 1/455, F 16 D 35/00**

(21) Application number: **86901125.4**

(22) Date of filing: **31.01.86**

(86) International application number:
**PCT/JP86/00038**

(87) International publication number:
**WO 86/04654 14.08.86 Gazette 86/18**

(54) **POWER TRANSMITTING STRUCTURE UTILIZING VISCOUS FLUID.**

<table>
<tr>
<td>

(30) Priority: **31.01.85 JP 15407/85**

(43) Date of publication of application:
**16.06.87 Bulletin 87/25**

(45) Publication of the grant of the patent:
**16.08.90 Bulletin 90/33**

(84) Designated Contracting States:
**FR**

(56) References cited:
**EP-A-0 157 236**
**FR-A-2 200 931**
**FR-A-2 302 457**
**FR-A-2 317 558**
**US-A-4 031 780**

**PRODUCT ENGINEERING, vol. 45, no. 10, October 1974, pages 35,36; "Continuous, precise speed control possible with hydroviscous drive"**

</td>
<td>

(73) Proprietor: **TOCHIGIFUGI SANGYO KABUSHIKI KAISHA**
**2388 Omiya-machi**
**Tochigi-shi Tochigi-ken (JP)**

(72) Inventor: **TERAOKA, Masao Tochigifujisangyo Kabushiki Kaisha**
**2388 Omiya-machi Tochigi-shi**
**Tochigi-ken 328 (JP)**

(74) Representative: **Descourtieux, Philippe et al**
**CABINET BEAU de LOMENIE 55 rue d'Amsterdam**
**F-75008 Paris (FR)**

</td>
</tr>
</table>

Courier Press, Leamington Spa, England.

## Description

Field of the Invention

This invention relates to a power transmission apparatus for use in, for example, a vehicle.

Background of the Invention

The differential gear device of a vehicle is used to absorb the differential rotation speed produced between front and rear wheels and left and right wheels. In order to avoid the situation that a wheel on one side rotates at a high speed under no load due to slipping for instance, whereas the driving power is lost for the wheel on the other side, it is known to provide a power transmission apparatus with a slip limitation or restriction function by using a viscous resistance of a highly viscous fluid, which is disclosed, for example, in Japanese patent publication No. 58-48779.

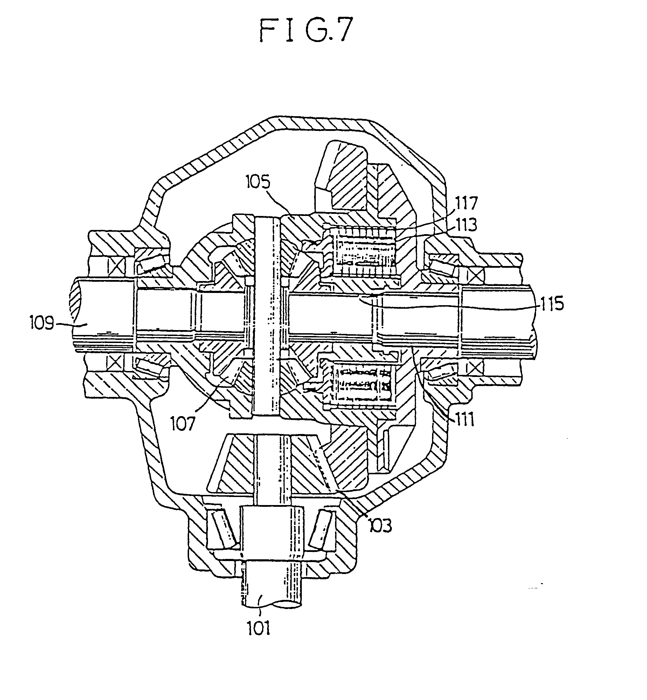

As shown in Fig. 7, for example, in a differential apparatus in which an input torque from an inlet shaft 101 is transmitted through an inlet gear 103, a gear case 105 and a differential gear 107 and split there for transmission to a first transmission shaft 109 and a second transmission shaft 111 arranged on the left and right sides, an operation chamber 113 is formed to sealingly enclose part of the periphery of the second transmission shaft 111, as shown on the right side of Fig. 7.

Formed between the operation chamber 113 and the second transmission shaft 111 are a plurality of disk-shaped resistance plates 117 which are arranged with a short space therebetween, perpendicular to the axis through a bush 115 secured to the outer periphery of the second transmission shaft 111.

The resistance plates 117 are alternatively engaged with the outer periphery of the bush 115 and with the inner periphery of the operation chamber 113. The operation chamber 113 is filled with a highly viscous fluid such as silicone oil, etc.

In such a differential gear apparatus, the slip limitation mechanism comprising the resistance plates will not function due to the substantial lack of differential rotation during straight motion of the vehicle. During motion around a curve, since the differential rotation is not so much large, the differential rotation absorbing function of the differential gear apparatus is not affected by the slip limitation mechanism.

When a wheel on one side slips during running on a rough road, the driving shaft only on this side is subjected to a lower load, so that the input torque is transmitted to this side only, which will cause fast rotation under no load. In this situation, a rapid relative rotation is caused between the gear case 105 and the second driving shaft 111, and a higher resistance force is acted between the resistance plates 117 and the highly viscous fluid to limit the slide between the gear case 105 and the second driving shaft 111, thereby providing power transmission between them and preventing one-side torque transmission toward the shaft on the lower load side, making it possible to provide power transmission toward the driving shaft on the higher load side.

However, in such a power transmission apparatus in which the slip limitation function is utilized only by using the viscous resistance of highly viscous fluid, the torque transmission capability is determined only by the coefficient of viscosity of the viscous fluid, the size and shape of the resistance plates and the coefficient of surface friction, so that the apparatus becomes large if the torque transmission capability must be increased. Further, a rapid relative movement between the both shafts causes a resistance force for torque transmission, which is a power transmission allowing slipping to an extent between the both shafts, so that the whole apparatus becomes large due to the small initial torque transmission capability, which is a shortcoming of the power transmission apparatus. In addition, the slip limitation characteristic is substantially constant with reference to the relative movements, which could not be readily changed. Accordingly, the apparatus cannot respond to subtle changes in the running conditions.

FR-A-2 200 931 shows a viscous coupling having two sets of interleaved discs, in which the spacing between the discs is adjusted by external means. It is a simple viscous coupling having a single output shaft, and not a differential gear.

EP-A-157236 (published October 9, 1985) describes a viscous shear coupling having two sets of interleaved discs, in which the spacing between the discs is controlled in another manner than from a temperature rise.

US-A-3923113 discloses a viscous shear coupling in which a time lag can appear in the operation after the instant where a relative rotation is produced between the input and output shafts.

This invention is created to overcome these problems in the prior art, wherein the viscous resistance of a fluid is utilized with improved operating characteristics and torque transmission capacity with a globally compact apparatus.

Another object of the present invention is to provide a power transmission apparatus which readily responds to variations in the running conditions by arbitrarily adjusting the operation characteristics and torque transmission capacity.

The foregoing objects are obtained, according to the present invention, by providing a limited slip differential of the kind described in FR-A-2 317 558, as defined in the preamble of claim 1, with the features specified in the characterizing part of this claim.

According to the present invention, the power transmission apparatus has a slip limitation function utilizing the viscous resistance of a fluid with a decreased time lag, and a compact and lightweight power transmission apparatus is obtained.

The slip limitation function can be obtained before the slipping occurs.

Since the slip limitation is able to change in a broader diversified manner in correspondence with the running conditions, the running stability of the vehicle is outstandingly improved with a compact and lightweight apparatus.

Brief Description of the Drawings

Fig. 1 is a cross-sectional view of a first preferable embodiment of the present invention.

Fig. 2 is a cross-sectional view of a second embodiment.

Fig. 3 is a cross-sectional view of a third embodiment.

Fig. 4 is a graph showing a couple of examples of operation characteristics of the third embodiment.

Fig. 5 is a cross-sectional view of a fourth embodiment.

Fig. 6 is a cross-sectional view of a fifth embodiment.

Fig. 7 is a cross-sectional view of a conventional apparatus.

Most Preferable Modes For Carrying Out The Invention

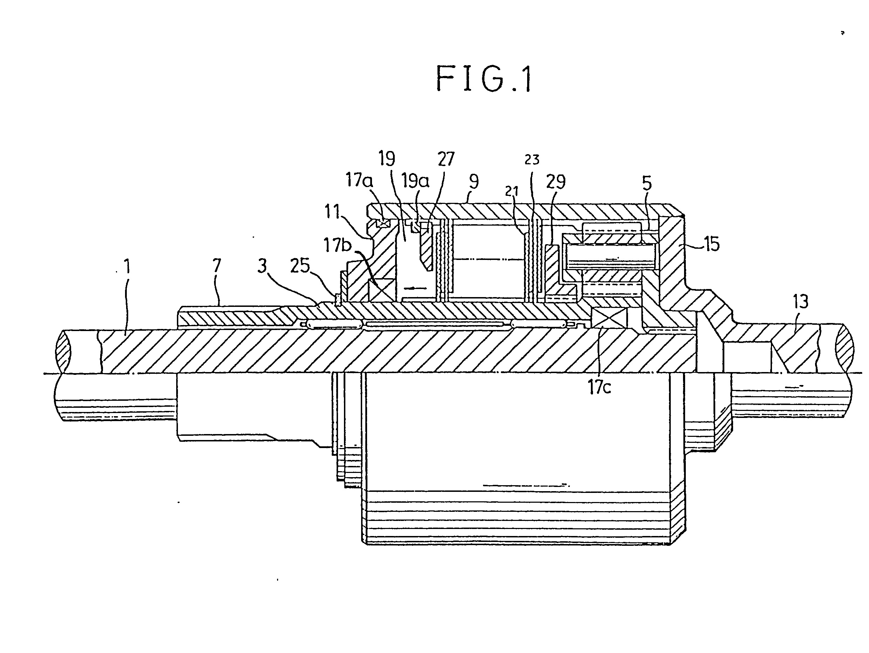

The following is a description corresponding to the attached drawings to explain the present invention in detail. Referring to one embodiment of this invention shown in Fig. 1, an input shaft 1 is placed in the central portion of the apparatus. On the outer periphery of the input shaft 1, a first transmission shaft 3 is rotatably provided through bearings therebetween. The first transmission shaft 3 is hollow and coaxial with the inlet shaft 1, and connected at one end to the inlet shaft 1 through a differential gear mechanism 5 of planetary gear type. The first transmission shaft 3 is provided with a spline 7 at the other end thereof to which another transmission member is inserted and leads to a front wheel driving shaft (not shown).

Disposed on the outside of the first transmission shaft 3 is a second transmission shaft 9 which is coaxial with the first transmission shaft 3 and blocked at one end with a side plate 11. The first transmission shaft 3 rotatably extends through the central portion of the side plate 11. The side plate 11 is water-tightly secured to one end of the second transmission shaft 9 to be capable of thrust movement, thereby rotating together with the second transmission shaft 9. The other end of the second transmission shaft 9 is integrally connected to a disk-like member 15 at one end of a rear-side driving shaft 13 provided adjacent to the axis of the apparatus, and is connected nearby to the inlet shaft 1 through the differential apparatus 5.

The first transmission shaft 3, the second transmission shaft 9, the side plate 11, a hollow portion close to the one shaft end of the rear wheel side driving shaft 13, the disk like member 15 and a portion adjacent to the shaft end of the input shaft 1 form a watertight enclosed space therein which is further water-tightly sealed with seal mechanisms 17a, 17b and 17c to form an operation chamber 19.

The differential apparatus 5 is disposed within the operation chamber 19. In addition, within the chamber 19, a plurality of disk-shaped first resistance plates 21 and a plurality of disk-shaped second resistance plates 23 are alternatively arranged perpendicularly to the central axis for thrust movement. The first resistance plates have ports and are spline-fitted into the outer peripheral portion of the first transmission shaft 3, and the second resistance plates 23 have ports and are spline-fitted into the inner peripheral portion of the second transmission shaft 9.

The operation chamber 19 is filled with e.g. a silicone oil as a highly viscous fluid having a lubricating effect. The silicone oil can contain a lubricant oil including molybdenum disulfide particles. Thus, an oil film is formed between the resistance plates 21 and 23. The inner annular side of the sideplate 11, which forms one part of the operation chamber 19, rotates freely in a watertight manner with the first transmission shaft 3. In addition, a stopper ring 25 is mounted on the first transmission shaft 3 in the vicinity of the outside position of the sideplate 11, and bounds in the outer direction the displacement of the sideplate 11 in relation to the first transmission shaft 3. The outer peripheral rim of the sideplate 11 is capable of sliding in the thrust direction in a watertight manner with the second transmission shaft 9. The inner circumference of the end section of the first transmission shaft 3, inside of the operation chamber 19, is watertight with the input shaft 1. Both shafts freely rotate relative to one another, and a slight sliding in the thrust direction is also possible. Accordingly, when the pressure within the operation chamber 19 is elevated, the sideplate 11 and the first transmission shaft 3 act as a member, namely a piston, which can move within a distance range set in the outer side (the left side in Fig. 1). A pair of ring members 27 and 29 are positioned on both sides of the first resistance plates 21 and the second resistance plates 23, inside the operation chamber 19. One ring member 27 is attached to the inner circumference of the second transmission shaft 9. The other ring member 29 is attached to the first transmission shaft 3, in a portion adjacent to the section where the differential device 5 is connected to the first transmission shaft 3. A stopper 19a which protrudes from the inner circumference of the second transmission shaft 9 is provided between the ring member 27 and the sideplate 11. The ring member 27 is regulated by the stopper 19a so that it cannot move beyond this position toward the sideplate 11.

In the above configuration, when the piston constituted by the parts 3, 11 and 25 is activated, the one ring member 27 is not displaced, and the other ring member 29, integrated with the first transmission shaft 3 to move in the thrust direction, becomes a clamp means by which the groups of first resistance plates 21 and second resistance plates 23 are clamped.

The first resistance plates 21 and second resistance plates 23 are juxtaposed, a thin film of high viscosity fluid interposed therebetween. Both resistance plate groups do not contact each other, or else contact with little fastening force. An input couple is transmitted to the first transmission shaft 3 and the second transmission shaft 9 from the input shaft 1 through the differential mechanism 5. The input couple is transmitted to the driving shafts of the front and rear wheels. No differential absorption phenomena occurs in the differential mechanism 5 and no relative rotation occurs between the first transmission shaft 3 and the second transmission shaft 9 until some differential rotation occurs between the front and rear wheels driving shafts. Thus both the wheels keep the same speed and same direction of rotation.

Supposing that, for example, the front wheels slip; the driving torque of the first transmission shaft 3 connected to the front wheels considerably decreases, resulting in that the inlet torque is transmitted only to the first transmission shaft 3, allowing to rotate at high speed. In this condition, power transmission is achieved by the function of slip limitation, that is rotation resistance force corresponding to the viscosity resistance between the first resistance plates 21 and the second resistance plates 23 which is obtained from the high viscosity fluid due to any form of relative rotation caused between the first resistance plates 21 and the second resistance plates 23.

Further in the first embodiment of the present invention, in addition to the function and operation mentioned above, a pressure increase, or rising phenomena, in the operation chamber 19 due to temperature rise therein, which rise occurs quickly or in a short time when the first and second resistance plates 21 and 23 rotate at a high relative speed, is utilized effectively in the present invention.

In more detail, the pressure rising due to the temperature increase, which occurs abnormally in comparison with the ordinary case when the relative rotation speed rises, is converted to thrust movement or piston action of the sideplate 11 and the first transmission shaft 3 in the operation chamber 19, resulting in an operation of the ring members 27 and 29 functioned as a clamp means. Consequently, the first resistance plates 21 and the second resistance plates 23 arranged side by side in groups are compressed, resulting in intimate contact of these resistance plates. As a result, they create a condition similar to the clamping effect of a friction clutch mechanism.

Consequently, in accordance with the present invention, power transmission capability from the first power transmission shaft 3 and the second power transmission shaft 9 is remarkably improved with respect to the apparatuses of the prior art.

In other words, the inventive apparatus is considerably, small and lightweight relative to conventional devices, and yet can transmit the same level of torque.

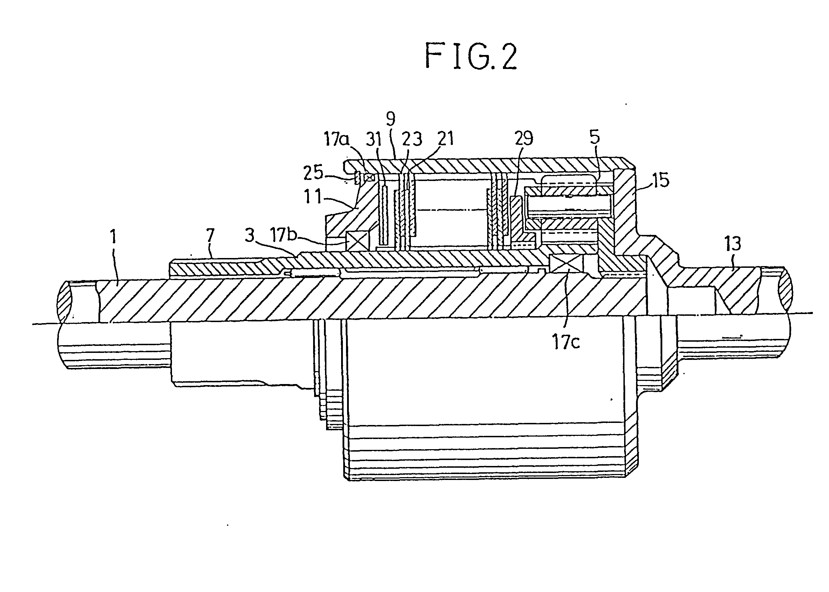

Fig. 2 shows a second embodiment of the present invention. The same reference numbers are used for all structural parts which are substantially the same as in the first embodiment. In this embodiment, a ring body 31, which is made from bimetal or from a fluid with a high coefficient of expansion enclosed in a film of elastic material, is positioned on the inside of the sideplate 11 of the first embodiment, and the stopper ring 25 is mounted on the side of the second transmission shaft 9. In this embodiment, the displacement accompanying the expansion of this ring body 31 when the temperature is raised is used as the energizing means in the clamping of the first resistance plates 21 and the second resistance plates 23, and these resistance plates 21, 23 tightly abut to each other in a stronger, more reliable manner so that the power transmission efficiency is improved.

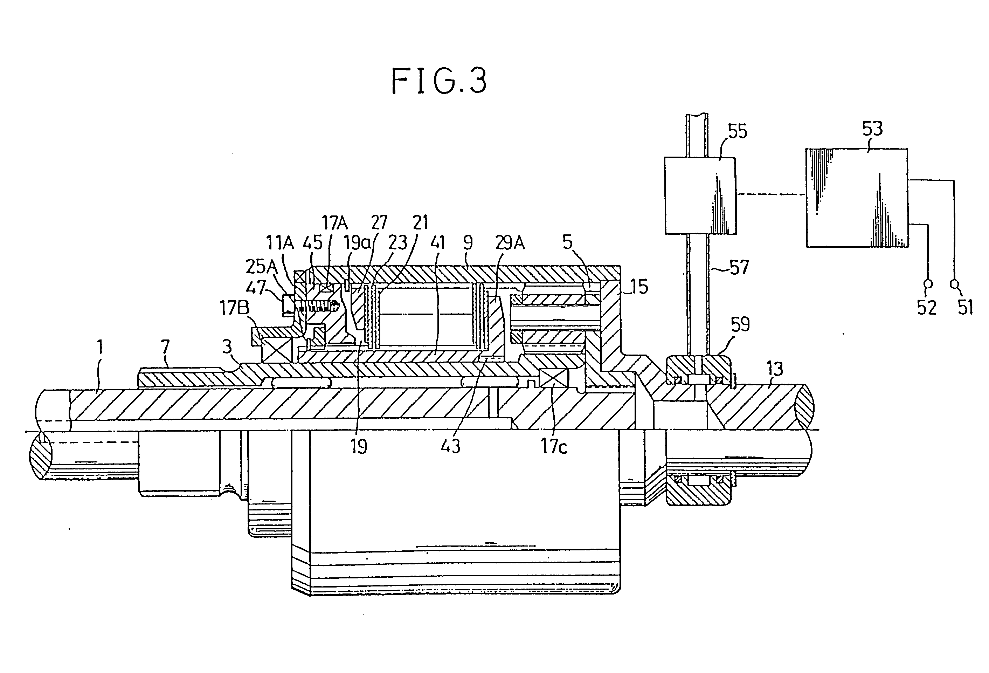

Fig. 3 shows a third embodiment. The members which are the same as those used in the first embodiment are indicated by the same reference numeral for omission of description. The second transmission shaft 9 is blocked at one end with respect to the first transmission shaft 3 by a side plate 11A. The sideplate 11A is of L-shaped cross-section. The outer periphery portion of the sideplate 11A is engaged with the shaft end of the second transmission shaft 9 for thrust movement. The inner periphal portion is water-tightly engaged with the outer periphery of the first transmission shaft 3 through a seal mechanism 17B for rotation and thrust movements.

The other end of the second transmission shaft 9 is water-tightly and integrally connected to a disk like member 15 at one end of the rear wheel side driving shaft 13 provided adjacent to the axis. The other end of the second transmission shaft 9 is also connected to the inlet shaft 1 near here through the differential gear mechanism 5.

Another hollow shaft 41 is rotatably provided in a coaxial relationship with the first transmission shaft 3 and on the outer periphery thereof. The end of the hollow shaft 41 on the side of the differential gear mechanism 5 is provided with a spline 43 between the first transmission shaft 3 and the hollow shaft 41 for thrust movement. An annular member 29A is integrally provided on the outer periphery of the end of the hollow shaft 41. Mounted on the outer periphery of the other end of the hollow shaft 41 is a stopper ring 25A on one side of which an annular piston 45 is rotatably inserted. The piston 45 is engaged in a water-tight manner on the outer periphery thereof with the inner periphery of the second transmission shaft 9 through a seal mechanism 17A for thrust movement. Piston 45 is also connected to the sideplate 11 through a bolt means 47.

Disposed at a position inward of the piston 45 placed at one end of the interior of the operation chamber 19 is an annular member 27 fitted into the inner periphery of the second transmission shaft 9. A stopper ring 19a is provided between the annular member 27 and the piston 45 to prevent further axial movement of the annular member 27 toward the piston 45.

The annular member 27 and the annular member 29A at one end of the hollow shaft 41 clamp the first and second resistance plates 21 and 23 in groups, thus forming a clamping means for the resistance plates 21 and 23 associated with the thrust movement of the piston 45.

The piston 45 provides for thrust movement by the pressure variation within the operation chamber 19. The pressure is controlled by an outside control comprising a pressure control mechanism, which is comprised of sensors 51, 52, a controller 53, a regulator 55 and operating fluid. The sensors are used to detect the road conditions where each wheel comes into contact and the differential rotations of the wheels. The operating fluid may be the same as the highly viscous fluid with lubrication within the operating chamber 19. The operating fluid flows through a conduit 57, which is connected to the hollow portion of the end of the rear wheel driving shaft 13 through a connector 59, and communicated with the operation chamber 19. The connector 59 is of a type designed for rotatably surrounding the rear wheel side driving shaft 13.

In accordance with the third embodiment, the sensors 51 and 52 sense or detect the condition of road through movements of the suspension devices and the controller 53 controls the driving condition of the car. When the car enters a rough road which will bring slippages to the wheels, the controller outputs immediately orders to change the operation liquid pressure to raise the pressure by means of the regulator to the operation chamber 19 through the connector 59. As a result, the piston 45 undergoes thrust movement reducing the distance between the ring members 27 and 29A which form a clamping device compressing the first and second resistance plates 21 and 23 in groups arranged in the manner mentioned above. The resistance plates are so intimately contacted to each other so as to produce or obtain a predetermined friction force. As described above in detail, a car constructed according to the present invention demonstrates a suitable slippage limitation function which corresponds to condition of the rough road at the early stage of the car entering onto the rough road; thus, the car can benefit from considerably improved power for getting the wheels or car out of the rough road when some slippage occurs on the wheels, as well as improved straight-running capability or stable-running characteristics during running on a rough road.

During running on a flat road, the sensors 51 and 52 are changed from the detection mode of the road surface condition to the detection mode of the rotation differential between the wheels, and controlled to provide suitable slip limitation while absorbing the rotation differential between the front and rear wheels during running along a curve.

By controlling the pressure within the operation chamber 19 from outside with the controller 53, the operation forces of the slip limitation function, operation characteristics, the operation timing with a combination of sensors 51, 52 and other adjustment and design conditions, changes can be made in a much broader diversified manner as described hereinafter, and further can be implemented either automatically or manually.

Now, in the case where the pressure in the operation chamber 19 is not controlled from outside, the temperature of the highly viscous fluid is increased in concert with the relative movement of the first resistance plates 21 and the second resistance plates 23 in the hermetically sealed operation chamber 19, and the pressure also increases.

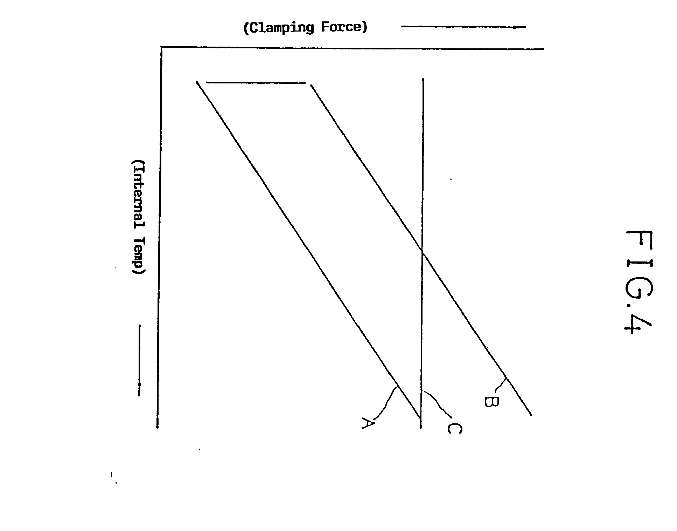

Accordingly, the first transmission shaft 3 and the second transmission shaft 9 are joined through the thrust movement of the piston 45 and the activation of the clamp means of the two resistance plate groups 21, 23. The relationship between the strength of the joint and the temperature inside the operation chamber 19 is shown by the line A in Fig. 4.

On the other hand, since the pressure within the operation chamber 19 is controlled from outside in the third embodiment, a certain pressure is used for clamping from the initial state, and then the clamping power together with the internal temperature can be increased as shown by line B shifted upwardly from line A in Fig. 4.

Further, as shown by line C in Fig. 4, the clamping force can be constant from a lower internal temperature to a higher internal temperature in the operation chamber 19. This is accomplished by increasing the pressure from outside, when the temperature within the operation chamber 19 is low, and then decreasing the pressure from outside as the clamping force is increased with the increased temperature and pressure within the operation chamber 19.

Consequently, the control pressure from outside can be set in different ways and changed to obtain arbitrary clamping characteristics, that is, slip limitation characteristics, which is an improvement over the temperature and pressure relationship in the case where the pressure within the operation chamber 19 is not controlled from outside.

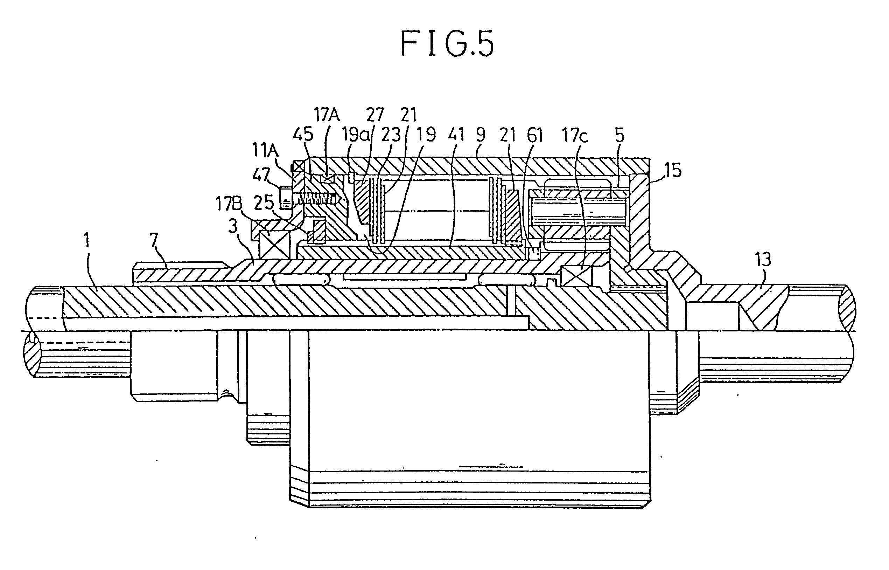

Fig. 5 shows a fourth embodiment of the present invention. The same reference numbers are used for all structural parts which are substantially the same as in the first to third embodiments, and no further explanation will be made here. In this embodiment, a cam mechanism 61 is positioned between the first transmission shaft 3 and the end section of the hollow shaft 41 on the side of the differential device 5 shown in the third embodiment.

In the cam mechanism 61 between the first transmission shaft 3 and the hollow shaft 41, when the front wheel side drive shaft, specifically, the first transmission shaft 3 is about to rotate at high speed, and then the cam mechanism 61 is about to drive the hollow shaft 41, at that time, a thrust force is developed in the cam mechanism 61 corresponding to the drive torque of the hollow shaft 41, which corresponds to the relative rotational resistance between the first resistance plates 21 and the second resistance plates 23. This thrust force is added to that of the clamp means of the first resistance plates 21 and the second resistance plates 23 through the action of the piston 45 accompanying the pressure elevation in the operation chamber 19. Then, by means of the cam mechanism 61, the thrust force is operated from the instant that a relative rotation is produced, and so there is almost no time lag. When this thrust force is also added to that of the clamp means, causing the tendency to strengthen the clamp between the first resistance plates 21 and the second resistance plates 23, the torque on the cam mechanism 61 increases. As a result, the thrust force at this cam mechanism 61 becomes large, and the clamp between the resistance plates 21, 23 is strengthened even further. The activation force of the piston 45 is strongly energized through a pressure increase inside the operation chamber 19 and the power transmission capability between the first transmission shaft 3 and the second transmission shaft 9 increases even more rapidly under identical conditions. Therefore, extrication from bad conditions, such as the slipping of the wheels on one side of the vehicle, can be extremely fast and accurate. In other words, for the same torque transmission, each stage of the power transmission device is made small and light.

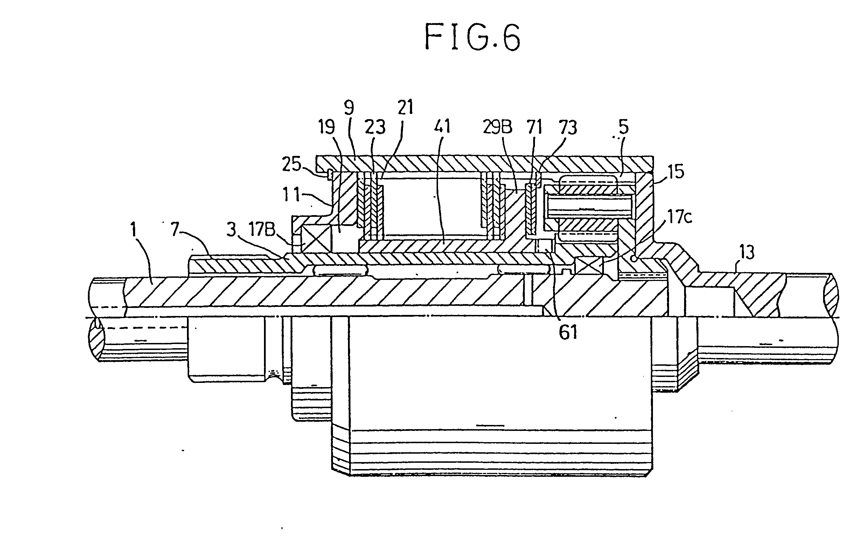

Fig. 6 shows a fifth embodiment of the present invention. In this embodiment, the thrust movement of the piston is no longer caused by the pressure elevation in the operation chamber 19, but by the action of either a bimetal ring body 71 or a ring body of fluid with a high coefficient of expansion enclosed in a film of elastic material, positioned so that it contacts one surface of a ring member 298 of the hollow shaft 41, on the side of the cam mechanism 61, the one surface being opposite to the other surface of the ring member 29B which contacts the first resistance plates 21 and the second resistance plates 23, and the outer rim of the ring body 71 being in contact with a stopper ring 73. The other end surface of the blocks of the first resistance plates 21 and the second resistance plates 23 directly contacts the sideplate II. In this type of configuration, the clamp means of the first resistance plates 21 and the second resistance plates 23 uses the displacement of the bimetal ring body accompanying the elevation of temperature in the operation chamber 19 as activation power, which is augmented by the thrust force developed by the cam mechanism 61.

## Possibilities for Industrial Application

As outlined above, the power transmission device of the present invention, provided between the front and back wheels, or between the left and right wheels of a vehicle, is suitable for effectively limiting the differential rotation between the wheels.

## Claims

1. A limited slip differential housed within a common housing and provided with an input shaft (1) and two output shafts (3, 9); the first and second output shafts (3, 9) being rotatably disposed in coaxial relationship defining an enclosed annular chamber (19) therebetween which is filled with a working viscous fluid, and the input shaft (1) being coupled to the first and second output shafts via a differential mechanism (5); comprising a viscous coupling formed between the two output shafts and including a plurality of first resistance discs (21) engaged with the first output shaft (3) in axially slidable but circumferentially fixed relationship; a plurality of second resistance discs (23) interleaved with the first resistance discs (21) and engaged with the second output shaft (9) in axially slidable but circumferentially fixed relationship; end plates defining the limits of the axial motions of the first and second resistance discs at either axial end of the annular chamber; piston means (45) disposed in the annular chamber (19) in axially slidable manner so as to cause an axial displacement between the first and second output shafts (3, 9) according to the pressure of the working viscous fluid contained in the annular chamber (19); clamp means (27, 29A, 29B) for reducing the axial spacing between the first and second resistance discs (21, 23) according to the movement of the piston means (45); a temperature sensitive element and a cam element;

characterized in that the temperature sensitive element is a ring body (31, 71) which varies an axial dimension thereof according to the change in temperature and is disposed between any two of the discs or between one of the end plates and the adjacent resistance disc, and in that the cam element (61) which converts a relative angular displacement between the first and second rotary shafts (3, 9) into a relative axial displacement between the first and second rotary shafts in a direction to reduce the spacing between the two clamp plates is disposed on the outer circumference of the first output shaft (3).

2. The limited slip differential of claim 1, characterized in that conduit means (57, 59) are further provided for communication of the annular chamber (19) with an external variable pressure source (53, 55).

## Patentansprüche

1. CSD-Kupplung, welche in einem gemeinsamen Gehäuse gelagert ist, mit einer Antriebswelle (1) und zwei Abtriebswellen (3, 9), wobei die erste Abtriebswelle (3) und die zweite Abtriebswelle (9) koaxial zueinander drehbar gelagert sind, so dass zwischen ihnen eine geschlossene Ringkammer (19) gebildet wird, welche mit einem zähflüssigen Arbeitsmedium gefüllt ist, wobei die Antriebswelle (1) über ein Differentialgetriebe (5) mit der ersten und zweiten Abtriebswelle gekuppelt ist; mit einer zwischen den beiden Abtriebswellen gebildeten viskosen Kupplung, die eine Anzahl von ersten Widerstandsscheiben (21), welche mit der ersten Abtriebswelle (3) derart verbunden sind, dass sie ihr gegenüber axial verschiebbar, jedoch im Umkreis unverschiebbar sind; und eine Anzahl von zweiten Widerstandsscheiben (23), welche mit den ersten Widerstandsscheiben (21) verschachtelt und mit der zweiten Abtriebswelle (9) derart verbinden sind, dass sie ihr gegenüber axial verschiebbar, jedoch im Umkreis unverschiebbar sind, aufweist; mit Endplatten, welche die Grenzen der Axialbewegungen der ersten und zweiten Widerstandsscheiben an jedem axialen Ende der Ringkammer bestimmen; mit einem Kolben (45), der in der Ringkammer (19) angeordnet ist, wo er axial derart verschiebbar ist, dass zwischen der ersten und der zweiten Abtriebswelle (3, 9) eine von dem Druck des in der Ringkammer (19) enthaltenen zähflüssigen Arbeitsmediums abhängige Axialbewegung erzeugt wird; mit einer Spannvorrichtung (27, 29A, 29B) zum Verkleinern des Axialabstandes zwischen der ersten und zweiten Widerstandsscheibe (21, 23) gemäss der Bewegung des Kolbens (45); mit einem temperaturempfindlichen Glied und einem Nockenglied,

dadurch gekennzeichnet, dass das temperaturempfindliche Glied ein Ringkörper (31, 71) ist, dessen axiale Abmessung je nach Temperaturänderung variiert und der zwischen zwei beliebigen Scheiben oder zwischen einer der Endplatten und der angrenzenden Widerstandsscheibe angeordnet ist, und dass das Nockenglied (61), welches eine relative Winkelbewegung zwischen der ersten und zweiten Drehwelle (3, 9) in eine relative Axialbewegung zwischen der ersten und zweiten Drehwelle umwandelt, und zwar in der Richtung, die einer Verkleinerung des Abstands zwischen den beiden Spannplatten entspricht, am äusseren Umfang der ersten Abtriebswelle (3) angeordnet ist.

2. CSD-Kupplung nach Anspruch 1, dadurch gekennzeichnet, dass zusätzlich eine Leitung (57, 59) zur Verbindung der Ringkammer (19) mit einer äusseren variablen Druckwelle (53, 55) vorgesehen ist.

**Revendications**

1. Différentiel à glissement limité, logé dans un seul carter et comprenant un arbre d'entrée (1) et deux arbres de sortie (3, 9), les premier et second arbres de sortie (3, 9) rotatifs étant disposés coaxialement de manière à définir entre eux une chambre annulaire (19) fermée, laquelle est remplie d'un fluide visqueux de travail, l'arbre d'entrée (1) étant accouplé aux premier et second arbres de sortie par l'intermédiaire d'un mécanisme différentiel (5); un accouplement visqueux formé entre les deux arbres de sortie et comportant une pluralité de premiers disques de résistance (21) reliés au premier arbre de sortie (3) de façon à pouvoir coulisser axialement en restant solidaires circonférentiellement par rapport à lui; une pluralité de seconds disques de résistance (23) imbriqués avec les premiers disques de résistance (21) et reliés au second arbre de sortie (9) de façon à pouvoir coulisser axialement en restant solidaires circonférentiellement par rapport à lui; des plaques d'extrémité définissant les limites des mouvements axiaux des premiers et seconds disques de résistance à chaque extrémité axiale de la chambre annulaire; un piston (45) disposé dans la chambre annulaire (19) où il peut coulisser axialement de manière à produire un déplacement axial entre les premier et second arbres de sortie (3, 9) en fonction de la pression du fluide visqueux de travail contenu dans la chambre annulaire (19); un dispositif de serrage (27, 29A, 29B) destiné à réduire l'espacement axial entre les premiers et seconds disques de résistance (21, 23) en conformité avec le mouvement du piston (45); un élément sensible à la température et un élément à came,

caractérisé par le fait que l'élément sensible à la température est un organe en anneau (31, 71) dont la dimension axiale varie en fonction du changement de température et qui est disposé entre deux disques quelconques ou entre l'une des plaques d'extrémité et le disque de résistance voisin, et que l'élément à came (61), lequel transforme un déplacement angulaire relatif entre les premier et second arbres rotatifs (3, 9) en un déplacement axial relatif entre les premier et second arbres rotatifs dans le sens correspondant à une diminution de l'espacement entre les deux plaques de serrage, est disposé sur le pourtour du premier arbre de sortie (3).

2. Différentiel à glissement limité selon la revendication 1, caractérisé par le fait qu'un conduit (57, 59) est prévu en plus pour faire communiquer la chambre annulaire (19) avec une source extérieure de pression variable (53, 55).

FIG.1

# FIG.2

FIG.3

3

# FIG.4

# FIG.5

EP 0 225 389 B1

# FIG.6

EP 0 225 389 B1

# FIG.7